# EUROPÄISCHE PATENTSCHRIFT

(11) **EP 2 122 128 B1**
(45) Veröffentlichungstag und Bekanntmachung des Hinweises auf die Patenterteilung: **11.05.2011**
(21) Anmeldenummer: 08709169.0
(22) Anmeldetag: 21.02.2008
(51) Int. Cl.: F01D 5/22

(54) **TURBINENRAD**
TURBINE WHEEL
ROUE DE TURBINE

(30) Priorität: 21.02.2007 EP 07405053
(43) Veröffentlichungstag der Anmeldung: 25.11.2009
(73) Patentinhaber: ABB Turbo Systems AG, 5400 Baden (CH)
(72) Erfinder: SCHELLENBERG, Peter, 5403 Ennetbaden (CH); HERTEL, Dirk, 5420 Ehrendingen (CH)
(74) Vertreter: ABB Patent Attorneys
(86) Internationale Anmeldenummer: PCT/EP2008/052140
(87) Internationale Veröffentlichungsnummer: WO 2008/101994

(56) Entgegenhaltungen:
- EP-A- 1 724 441
- DE-A1- 3 802 741
- FR-A- 2 432 134

## Beschreibung

### Technisches Gebiet

Die Erfindung bezieht sich auf das Gebiet der Strömungsmaschinen, insbesondere Abgasturbolader für aufgeladene Brennkraftmaschinen.

Sie betrifft ein Turbinenrad mit einer Vielzahl von Laufschaufeln, welche jeweils an ihren freien Enden Deckband-Segmente aufweisen.

### Stand der Technik

Axialturbinen thermischer Strömungsmaschinen, etwa Gasturbinen oder Turbinen von Abgasturboladern, weisen eine Vielzahl von Laufschaufeln auf, welche auf einer Nabe angeordnet sind, welche um eine Welle drehbar gelagert ist. Die Laufschaufeln weisen an ihren radial äusseren, freien Enden häufig Deckbänder - in der Fachsprache "Shroud" genannt - auf. Ein Deckband setzt sich aus einzelnen Segmenten zusammen, die mit jeweils einer Laufschaufel integral verbunden sind.

Die Segmente werden durch eine Torsionsvorspannung der Schaufeln bei der Montage oder im Betrieb durch die natürliche Entwindung der Schaufeln unter Fliehkrafteinfluss gegeneinander verspannt. Die Funktion der Deckbänder besteht in der Verbesserung des thermodynamischen Wirkungsgrades durch Minimierung der Spaltverluste, sowie in der Optimierung des Schwingungsverhaltens durch ihre dämpfende und versteifende Wirkung.

Die Gestaltung des Übergangs zwischen den Deckband-Segmenten zweier benachbart angeordneter Laufschaufeln erfolgt nach verschiedenen Kriterien in Bezug auf Thermodynamik, Betriebsfestigkeit, Flächenpressung, Montierbarkeit und Fertigung. Die optimale Form des Übergangs zwischen den Deckband-Segmenten ist dabei aufgrund der genannten Auslegungskriterien oft so kompliziert, dass sie nur mit aufwändigen Fertigungsverfahren hergestellt werden kann. Im Vergleich zu einfachen Flächen, die beispielsweise mit eindimensionalen Schleifvorgängen bearbeitet werden können, kann das bei der Fertigung gegossener Laufschaufeln zu erheblichen Mehrkosten führen.

Eine beispielhafte Form eines Übergangs zwischen den Deckband-Segmenten benachbart angeordneter Laufschaufeln von Gasturbinen ist in US 5,593,282, Fig. 4 abgebildet.

In EP 1 724 441 ist ein Übergang zwischen den Deckband-Segmenten benachbart angeordneter Laufschaufeln eines Turbinenrades offenbart, welcher in einen Kontaktbereich und einen Spaltbereich unterteilt ist, wobei Kontaktbereich und Spaltbereich radial auf einer Höhe angeordnet sind.

### Kurze Darstellung der Erfindung

Die Aufgabe der vorliegenden Erfindung besteht darin, den Übergang zwischen den Deckband-Segmenten benachbart angeordneter Laufschaufeln eines Turbinenrades derart zu gestalten, dass die Anforderungen in Bezug auf Thermodynamik, Betriebsfestigkeit, Flächenpressung, Montierbarkeit und Fertigung erfüllt werden können.

Erfindungsgemäss wird hierfür der Übergang zwischen den Deckband-Segmenten benachbart angeordneter Laufschaufeln eines Turbinenrades in zwei Bereiche aufgeteilt, einen einfachen, kostengünstig zu bearbeitenden Kontaktbereich und einen - beliebig komplizierten - gegossenen Restbereich. Das Deckband ist dabei in radialer Richtung, also über die Schaufelhöhe gesehen, in zwei Ebenen aufgeteilt. Die radial äussere, obere Ebene übernimmt im Kontaktbereich die Funktion der mechanischen Bindung zwischen den Schaufeln. Die Deckband-Segmente der benachbarten Schaufeln stehen in diesem Bereich in Kontakt.

Die untere Ebene des Deckbandes übernimmt die Funktion der Strömungsführung, insbesondere der Verminderung von Überströmungen an der Schaufelspitze. In diesem Bereich ist das Deckband in Strömungsrichtung gesehen vorteilhafterweise breiter als im Kontaktbereich. Der Übergang zu den benachbart angeordneten Laufschaufeln in dieser Ebene ist aus Strömungs- und Montierbarkeitsüberlegungen im allgemeinen anders orientiert als im Kontaktbereich. Da in dieser Ebene keine kraftschlüssige Verbindung erforderlich ist, kann die Formung der Oberfläche der Deckband-Segmente giesstechnisch realisiert werden. Zur Kompensation der Gusstoleranzen kann dieser Kontaktbereich als Spielpassung ausgelegt werden.

Im Kontaktbereich, welcher in axialer Richtung vorteilhafterweise im mittleren Bereich des Deckbandes angeordnet ist, erfolgt die Kraftübertragung zwischen den Laufschaufel-Enden. Der Restbereich des Übergangs, weist einen Spalt zwischen den Deckband-Segmenten der jeweils zueinander benachbart angeordneten Laufschaufeln auf, so dass es in diesem Bereich zu keinem Kontakt zwischen den Laufschaufeln kommt.

Erfindungsgemäss wird der Kontaktbereich mit einer einfachen Oberflächengeometrie ausgestattet, so dass er einfach mechanisch zu bearbeiten ist. Im Bereich des Spaltes hingegen, kann der Übergang einen komplexeren, insbesondere nichtlinearen Oberflächenverlauf aufweisen, welcher vorteilhafterweise bereits in der Gussform beim Herstellen des Gussrohlings der Laufschaufeln geformt wird. Der nicht für die Kontaktierung benötigte innere Bereich des Deckbandes liefert keinen Beitrag zur Kraftübertragung zwischen den Deckband-Segmenten der Laufschaufeln. Seine Funktion besteht im wesentlichen in der Reduktion der thermodynamischen Verluste durch Überströmung der Schaufelspitze.

Die Winkellage der Oberfläche im Kontaktbereich ist im wesentlichen durch Randbedingungen der Mechanik und der Montierbarkeit bestimmt. Die Kontaktflächen müssen aufgrund der hohen Masshaltigkeitsanforderungen mechanisch bearbeitet, z.B. geschliffen, werden. Für eine kostengünstige Bearbeitung können sie als ebene Flächen ausgeführt werden.

Weitere Vorteile ergeben sich aus den abhängigen Ansprüchen.

Kurze Beschreibung der Zeichnungen

Anschliessend sind anhand der Zeichnungen Ausführungsformen des erfindungsgemässen Übergangs zwischen den Deckband-Segmenten benachbart angeordneter Laufschaufeln eines Turbinenrades beschrieben. Hierbei zeigt
- Fig. 1: eine isometrische Ansicht - schief zur Achse, radial nach aussen - auf eine Gruppe von Laufschaufeln, welche erfindungsgemäss aneinander gereiht sind,
- Fig. 2: eine isometrische Ansicht - schief zur Achse, radial nach innen - auf die Laufschaufelgruppe nach Fig. 1,
- Fig. 3: eine isometrische Ansicht - in axialer Richtung - auf die Laufschaufelgruppe nach Fig. 1, und
- Fig. 4: eine isometrische Ansicht - senkrecht zur Achse, radial nach innen - auf die Laufschaufelgruppe nach Fig. 1.

### Weg zur Ausführung der Erfindung

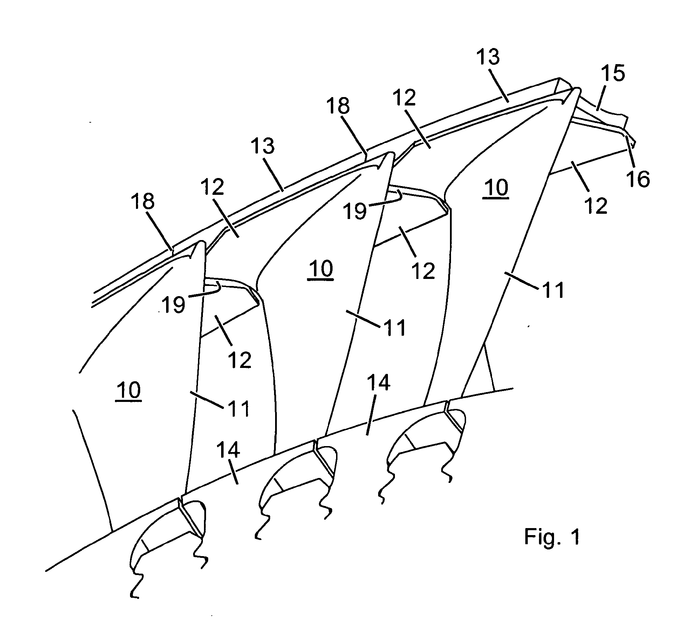

Fig. 1 zeigt einen Teil der Laufschaufeln 10 einer Axialturbine eines Turboladers. Die Laufschaufeln sind mit Schaufelfüssen 14 in einem Schaufelträger, der Nabe des Turbinenrades, angeordnet. Die Nabe des Turbinenrades ist auf einer Welle um eine Achse drehbar gelagert. Die hier verwendeten Begriffe "radial", "axial" und "in Umfangsrichtung" beziehen sich auf diese Achse. In der Regel sind die Schaufelfüsse tannenbaumförmig ausgebildet und in axialer Richtung in gegengleich geformten Nuten eingeschoben und axial gesichert. Die Laufschaufeln weisen einen aerodynamisch geformten Schaufelkörper 11 auf, welcher der Strömung, also den heissen Abgasen, ausgesetzt ist. An ihren radial äusseren, freien Enden weisen die Laufschaufeln ein die Schaufelkörper in axialer Richtung zumindest abschnittsweise überragendes Deckband auf. Das Deckband ist in viele kurze Segmente 12 unterteilt, welche jeweils mit einer Laufschaufel integral verbunden sind. Das Deckband der erfindungsgemäss ausgestalteten Laufschaufeln weist radial ausserhalb der sich in axialer Richtung erstreckenden Segmente einen zweiten, axial kürzer ausgebildete Bereich 13 auf, welcher der Verbindung der einzelnen Laufschaufeln untereinander dient. Die Funktion des radial inneren Deckbandbereichs liegt im wesentlichen in der Reduktion der thermodynamischen Verluste durch Überströmung der Schaufelspitze.

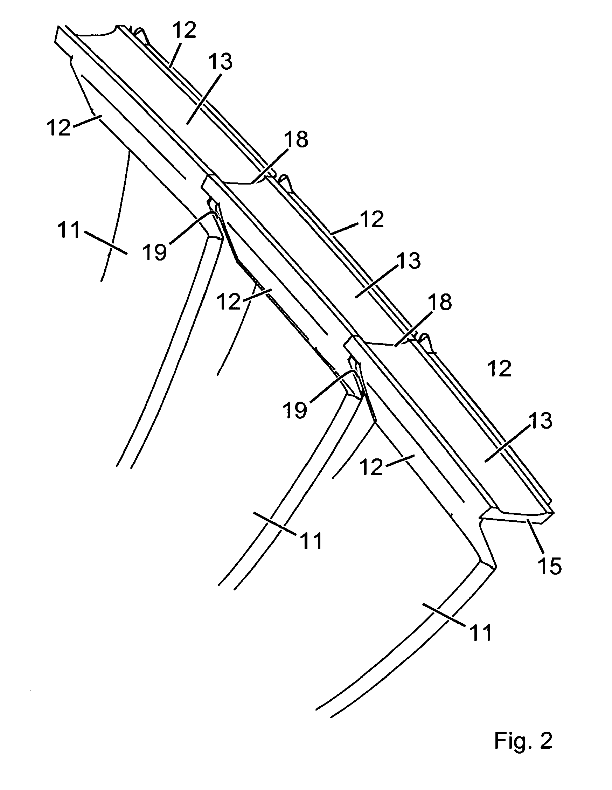

Wie aus der Fig. 1 hervorgeht, ist im radial inneren Bereich der Deckband-Segmente 12 zwischen jeweils zwei benachbart zueinander angeordneten Deckband-Segmenten ein Spalt 19 vorhanden. Dagegen sind die radial äusseren Deckband-Segmente, wie dies aus Fig. 2 ersichtlich ist, lückenlos aneinandergepresst. Erfindungsgemäss sind somit die Übergänge der Deckband-Segmente in einen Kontaktbereich und einen Spaltbereich unterteilt.

Im Kontaktbereich weist jedes Deckband-Segment - in Umfangsrichtung an beiden Enden - eine einfach zu bearbeitende Kontaktfläche 15 auf. Diese ist vorteilhafterweise eine einzelne, ebene Fläche oder dann setzt sie sich aus einigen wenigen, ebenen Flächen zusammen. Der Kontaktbereich jeder Laufschaufel lässt sich somit, dank der einfachen geometrischen Form, auf einfach weise mechanisch bearbeiten, beispielsweise schleifen oder fräsen.

Im Spaltbereich dagegen kann die Oberfläche 16 eine beliebig komplexe Form aufweisen, so dass beispielsweise ein strömungstechnisch optimierter Übergang geformt werden kann. Dieser Bereich des Übergangs kann bereits beim Giessen der Laufschaufel in seiner endgültigen Form hergestellt werden. Die Formgebung beim Giessen ist erheblich kostengünstiger als das nachträgliche mechanische Erstellen des komplexen Übergangsbereichs. Dank des vorhandenen Spalts können die sich bei komplexen Giessformen ergebenden Abweichungen von dem vorgesehenen Oberflächenverlauf toleriert werden, so dass in der Regel gänzlich auf eine Nachbearbeitung dieses Bereichs verzichtet werden kann.

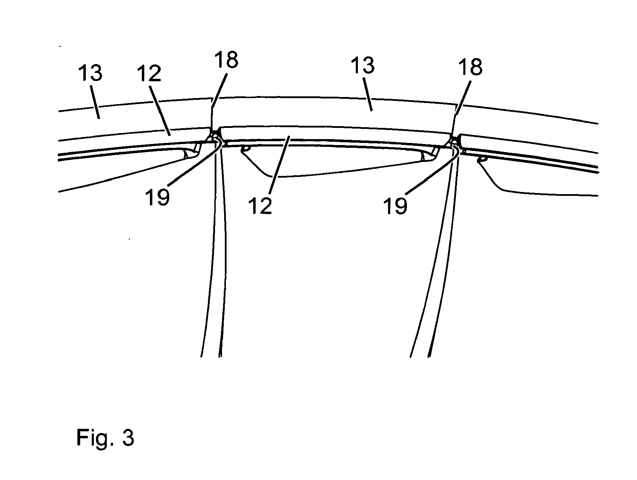

Fig. 3 zeigt die Gruppe von Laufschaufeln in axialer Richtung. Deutlich ist der Spalt 19 zwischen den axial hervorstehenden Deckband-Segmenten 12 zu sehen.

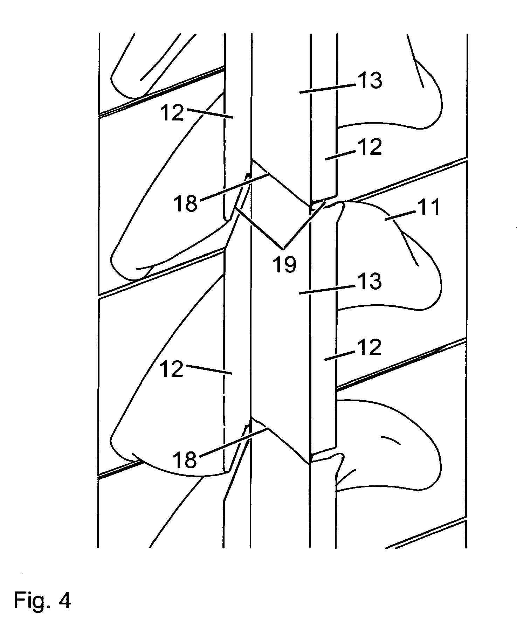

Fig. 4 zeigt die Laufschaufeln und das Deckband von radial aussen nach innen betrachtet. Wiederum ist der Spalt 19 zwischen den axial äusseren Deckband-Segmenten 12 zu sehen, sowie die in Umfangsrichtung eng aneinandergepressten inneren Bereiche 13 des Deckbandes.

### Bezugszeichenliste

- 10: Laufschaufel
- 11: Schaufelkörper
- 12: Deckband - Innenbereich
- 13: Deckband - Aussenbereich
- 14: Schaufelfuss
- 15: Kontaktfläche
- 16: Oberflächenverlauf im Spaltbereich
- 18: Kontaktbereich
- 19: Spaltbereich

## Patentansprüche

1. Turbinenrad, umfassend eine Vielzahl von Laufschaufeln (10), welche auf einer um eine Achse drehbaren Nabe angeordnet sind und welche jeweils an ihren radial äusseren Enden, Deckband-Segmente (12, 13) aufweisen, welche, in Umfangsrichtung aneinandergereiht, ein ringförmiges Deckband bilden, wobei der Übergang zwischen zwei benachbart angeordneten Laufschaufeln im Bereich des Deckbands in einen Kontaktbereich (18) und einen Spaltbereich (19) unterteilt ist, wobei im Kontaktbereich (18) die Deckband-Segmente (13) der jeweiligen Laufschaufeln in Umfangsrichtung aneinandergepresst sind, und im Spaltbereich (19) zwischen den Deckband-Segmenten (12) der jeweiligen Laufschaufeln in Umfangsrichtung ein Spalt vorhanden ist,
**dadurch gekennzeichnet, dass**
der Kontaktbereich (18) radial ausserhalb des Spaltbereichs (19) angeordnet ist, derart dass sich in Umfangsrichtung ein radial aussen liegendes Deckband aus in Umfangsrichtung zusammengepressten Deckband-Segmenten (12) ergibt und radial innerhalb davon sich ein in Umfangsrichtung durch Spalte getrenntes Deckband erstreckt.

2. Turbinenrad nach Anspruch 1, **dadurch gekennzeichnet, dass** die Laufschaufeln im Kontaktbereich (18) eine mechanisch bearbeitete Kontaktfläche (15) aufweisen und im Spaltbereich (19) mechanisch unbehandelt sind.

3. Turbinenrad nach einem der Ansprüche 1 oder 2, **dadurch gekennzeichnet, dass** die Laufschaufeln im Kontaktbereich (18) eine ebene Kontaktfläche (15) und im Spaltbereich (19) einen nichtlinearen Oberflächenverlauf (16) aufweisen.

4. Turbine eines Abgasturboladers, umfassend ein Turbinenrad nach einem der vorangehenden Ansprüche.

5. Abgasturbolader, umfassend eine Turbine nach Anspruch 4.

## Claims

1. Turbine wheel, comprising a multiplicity of moving blades (10) which are arranged on a hub rotatable about an axis and which have in each case at their radially outer ends shroud segments (12, 13) which, lined up in the circumferential direction, form a ring-shaped shroud, the transition between two adjacently arranged moving blades being subdivided in the region of the shroud into a contact region (18) and a gap region (19), in the contact region (18) the shroud segments (13) of the respective moving blades being pressed one against the other in the circumferential direction, and in the gap region (19) a gap being present in the circumferential direction between the shroud segments (12) of the respective moving blades, **characterized in that** the contact region (18) is arranged radially outside the gap region (19), in such a way that a radially outer shroud composed of shroud segments (12) pressed together in the circumferential direction is obtained in the circumferential direction and a shroud separated in the circumferential direction by gaps extends inside the said shroud segments.

2. Turbine wheel according to Claim 1, **characterized in that** the moving blades have a mechanically machined contact face (15) in the contact region (18) and are untreated mechanically in the gap region (19).

3. Turbine wheel according to either one of Claims 1 and 2, **characterized in that** the moving blades have a planar contact face (15) in a contact region (18) and a non-linear surface profile (16) in the gap region (19).

4. Turbine of an exhaust-gas turbocharger, comprising a turbine wheel according to one of the preceding claims.

5. Exhaust-gas turbocharger, comprising a turbine according to Claim 4.

## Revendications

1. Roue de turbine, comprenant une multiplicité d'aubes mobiles (10), qui sont disposées sur un moyeu pouvant tourner autour d'un axe et qui présentent respectivement à leur extrémité radialement extérieure, des segments de bande de renforcement (12, 13) qui, alignés les uns avec les autres en direction périphérique, forment une bande de renforcement annulaire, dans laquelle la transition entre deux aubes mobiles voisines l'une de l'autre est divisée, dans la région de la bande de renforcement, en une zone de contact (18) et une zone d'espacement (19), dans laquelle les segments de bande de renforcement (13) des aubes mobiles respectives sont pressés l'un contre l'autre en direction périphérique dans la zone de contact (18) et il se trouve un espace entre les segments de bande de renforcement (12) des aubes mobiles respectives en direction périphérique dans la zone d'espacement (19), **caractérisée en ce que** la zone de contact (18) est disposée radialement à l'extérieur de la zone d'espacement (19), de telle manière qu'il en résulte en direction périphérique une bande de renforcement située radialement à l'extérieur composée de segments de bande de renforcement (12) pressés les uns contre les autres en direction périphérique et qu'une bande de renforcement séparée par des espaces en direction périphérique s'étende radialement à l'intérieur de celle-ci.

2. Roue de turbine selon la revendication 1, **caractérisée en ce que** les aubes mobiles présentent une face de contact usinée mécaniquement (15) dans la zone de contact (18) et ne sont pas traitées mécaniquement dans la zone d'espacement (19).

3. Roue de turbine selon l'une quelconque des revendications 1 ou 2, **caractérisée en ce que** les aubes mobiles présentent une face de contact plane (15) dans la zone de contact (18) et une allure de surface non linéaire (16) dans la zone d'espacement (19).

4. Turbine d'un turbocompresseur à gaz d'échappement, comprenant une roue de turbine selon l'une quelconque des revendications précédentes.

5. Turbocompresseur à gaz d'échappement, comprenant une turbine selon la revendication 4.
